# EUROPÄISCHE PATENTSCHRIFT

(11) **EP 1 359 125 B1**
(45) Veröffentlichungstag und Bekanntmachung des Hinweises auf die Patenterteilung: **09.01.2008**
(21) Anmeldenummer: 03386011.5
(22) Anmeldetag: 21.04.2003
(51) Int. Cl.: C02F 3/34, C02F 1/72, C02F 1/32

(54) **Kombinierte biotechnologisch-chemische Methode zur Behandlung von flüssigen Abfällen aus der Produktion von Tafeloliven**
Combined biotechnological-chemical method for the treatment of liquid wastes from the table olives production
Procédé biotechnologique-chimique combiné pour le traitement de déchets liquides provenant de la production des olives de table

(30) Priorität: 30.04.2002 GR 2002100208
(43) Veröffentlichungstag der Anmeldung: 05.11.2003
(73) Patentinhaber: Lazaridi, Konstantia-Ekaterini, 18547 Piraeus (GR); Kyriacou, Adamantini, 17343 Athen (GR); Kotsou, Maria, 13122 Ilion, Athen (GR); Tasiopoulou, Stavroula, 17676 Kallithea, Athen (GR); Pilidis, George, 45445 Ioannina (GR)
(72) Erfinder: Lazaridi, Konstantia-Ekaterini, 18547 Piraeus (GR); Kyriacou, Adamantini, 17343 Athen (GR); Kotsou, Maria, 13122 Ilion, Athen (GR); Tasiopoulou, Stavroula, 17676 Kallithea, Athen (GR); Pilidis, George, 45445 Ioannina (GR)
(74) Vertreter: Argyriadis, Korinna

(56) Entgegenhaltungen:
- EP-A- 1 041 044
- EP-A- 1 097 907
- EP-A- 1 157 972
- BENITEZ F J ET AL: "TREATMENT OF OLIVE MILL WASTEWATERS BY OZONATION, AEROBIC DEGRADATION AND THE COMBINATION OF BOTH TREATMENTS" JOURNAL OF CHEMICAL TECHNOLOGY AND BIOTECHNOLOGY. (INTERNATIONAL JOURNAL OF BIOTECHNICAL AND CHEMICAL PROCESSES), ELSEVIER APPLIED SCIENCE PUBLISHERS. BARKING, GB, Bd. 74, Nr. 7, Juli 1999 (1999-07), Seiten 639-646, XP000880826 ISSN: 0268-2575
- FOUNTOULAKIS M S ET AL: "Removal of phenolics in olive mill wastewaters using the white-rot fungus Pleurotus ostreatus" WATER RESEARCH, ELSEVIER SCIENCE PUBLISHERS, AMSTERDAM, NL, Bd. 36, Nr. 19, November 2002 (2002-11), Seiten 4735-4744, XP004393045 ISSN: 0043-1354

## Beschreibung

Das Patent bezieht sich auf eine kombinierte biotechnologischchemische Methode zur Behandlung flüssiger Abfälle, die bei der Produktion von Tafeloliven entstehen, so dass diese bei Abfälle die notwendige Zertifikation (Norm) erhalten, um bei klassischen kommunalen bzw industruellen biologischen Kläranlagen aufgenommen werden zu können.
Industrielle Abfälle können normal von klasischen Kläranlagen nur dann akzeptiert werden, wenn sie bestimmte Voraussetzungen, relativ zu den maximal erlaubten Konzentrationen verschiedener Parameter, erfüllen Die flüssige Abfälle aus der Olivenindustrie, die einen sehr hoben CSB (Chemischer Sauerstoff Bedarf-10-35 g/l), B5B (Biologischer Sauerstoff Bedarf, 7-20 g/l), Salz-(4,5-16 dS/m und Natriumgehalt (0,4-6 g/l), als auch eine hohe Phenolkonzentration aufweisen sind so stark belastet, daß sie ohne Vorbehandlung nicht von einer kommunaler bzw. industrieller Kläranlage aufgenommen werden können. Die obigen ziemlich auseinander liegende Werte. wurden experimentell in verschiedenen Abfällen quantifiziert und stehen im Einklang mit den Werten aus der Literatur. Im Griechenland akzeptieren Kläranlagen in Industriegebieten flüssige Abfälle mit folgenden maximalen Konzentrationen CSB <1.12 g/l, BSB < 0.6 g/l und Phenole < 5 ppm Ähnliche Eingangskonzentrationen von Industrieabfällen gelten auch für kommunale Kläranlagen.

Die weltweite Produktion von Tafeloliven übertrifft heute 1.000. 000 t, während die griechische Produktion bei etwas mehr als 60 000 t liegt. Die flüßigen Abfälle, die bei der Verarbeitung von Baum- zu Tafeloliven ausfallen, werden leider ohen jede vorherige Vorbehandlung in, meistens wässige Umweltmedien (Flüsse, Meer) weggeworfen und stellen deswegen ein grosses Umweltproblem für den gesamten Mittelmeerraum dar. Alternativ werden diese Abfälle unterirdisch verfügt oder in großen oberirdische Verdampfungsreservoirs eingeführt (Kopsidas, 1994. Murillo et *al., 2000).* Bei freier Verfügung dieser Abfälle, führen der hohe pH Wert, der große Salzgehalt, die hohe Phenolkonzentration und die damit verbundene Phytotoxizität zur Kontaminierung des Bodens, des Meeres und des Grundwassers Für die obengenannten Gründe werden diese Abfälle von kommunalen und industriellen biologischen Kläranlagen ohne Vorbehandlung nicht akzeptiert, was wiederum für die entsprechende Produktionseinheiten zu sehr großen Problemen bei der Ausstellung der notwendigen Betriebslizenz von den jeweiligen Industrie- und Handelskammern führt.

Bis heute ist keine chemische oder biologische Methode zur Behandlung obengenannter Abfälle in einer Pilotanlage angewandt worden, wahrscheinlich weil diese Abfälle ein schwieriges biologisches Material für die Entwicklung von Mikroorganismen darstellen. Eine Methode die hauptsächlich im Spanien Anwendung findet ist die Konstruktion von großen Reservoirs, wo die flüssige Abfälle mit der Zeit verdampfen Diese Methode ist jedoch mit Geruchsproblemen verbunden die zu einer Umweltdiskriminierung des Umgangsgebiets fuhre können.
In der Literatur werden verschiedene experimentelle Versuche beschrieben, flüssige Abfälle aus der Olivenproduktion mit biologischen (anaerobe, aerobe, oder eine aerobe/anaerobe Kombination) oder chemischen (Oxidation mit UV Licht und/oder Ozon, Fenton Reagenz) vorzubehandeln. Diese Methoden verwenden jedoch zu teure Technologien und/oder bauen das organische Material und die phenolischen Verbindungen zu einem geringen Prozentanteil ab.

Aggelis *et al.* (2001), Rivas *et al.* (2000) und Borja *et al* (1994) haben zur Behandlung des Abfalls biologische Methoden mit gemischter mikrobieller Bevölkerung aus aktiviertem Schlamm der kommunalen Kläranlagen verwendet. Aggelis *et al.* (200 : haben sowohl anaerobe, aerobe als auch eine anaerobe/aerobe Kombination verwendet mit den folgenden Ergebnissen: im ersten Fall wurde 49% der organischen Kontaminanten und 12 % der phenolischen Verbindungen abgebaut, im zweiten 75% und 0% entsprechend und im Falle der anaeroben/aeroben Kombination wurden 83% der organischen Verbindungen und 28% Phenole abgebaut. Bei dieser Publikation wurden keine Angaben über Kosten gemacht, es ist jedoch bekannt, daß bei einer Kombination aus zwei biologischen Schritten die Konstruktions- und Betriebskosten relativ hoch liegen. Rivas et *al.* (2000) haben, um die antimikrobielle Wirkung der Phenole zu entgehen, Lösungen der flüssigen Abfälle aus der Olivenproduktion mit synthetischen Lösungen kommunaler Abfälle in einem Verhältnis 1:40 bis 1:10 untersucht und haben dabei eine Reduzierung des CSB Gehaltes von 45-80% und der Phenolkonzentration von 10-66%. Nach dem Gesetz ist jedoch die Verdünnung der Abfälle nicht erlaubt und somit fällt diese Lösung für reale Zwecke aus. Ähnlich waren die Ergebnisse der Arbeitsgruppe Borja et al (1994).

Die direkte Verfügung des Abfalls in verschiedenen Verdünnungen für das Gießen der Olivenbäume (eine relativ widerstandsfähige Pflanze) hatte eine negative Auswirkung für den Boden, da die Produktivität der Bäume eine abfallende Tendenz zeigte (Murillo et al.,2000).

Beltran et al.,(1999, 2001) haben nach der photochemische Oxidation dieses Abfalls, d.h. sie haben den Abbau der organischen Kontaminanten und speziell der phenolischen Komponenten mit Hilfe von ultraviolletem Licht mit oder ohne Verwendung von Oxidationsmitteln wie z.B. Ozon oder Wasserstoffperoxid geforscht.
In beiden Publikationen haben die Forscher selbsthergestellten flüssigen Abfall verwendet, den Sie anschließend im Verhältnis 1:25 verdünnt haben mit der Begründung, daß analoge Verdünnungen (Waschvorgänge) während des Produktions-Prozesses stattfinden. Unsere Erfahrung aus drei großen griechischen Fabriken, die Tafeloliven konservieren, haben gezeigt, daß die maximale Verdünnung ein Verhältnis 1:3 nicht übersteigt. Bei dieser Methode geben die Autoren eine CSB Reduzierung von 9 bis10% für den verdünnten Abfall aus der Entbitterung und 27 bis 31% für den flüssigen Abfall aus den ersten Waschvorgang. In einer vor kurzem veröffentlichten Publikation haben die Autoren (Beltran *et al*, 2001) betont daß Ihre Studie hauptsächlich auf die Quantenausbeute der photolitischen Reaktionen in bezug auf den Abbau der Modellsubstanzen und nicht auf die Bearbeitung des Abfalls orientiert ist. Zusätzlich erkennen Sie die hohen Kosten und die niedrige Leistung der Methode an. In einer etwas älteren Publkation haben dieselben Autoren (Beltran *et* al.. 1999) eine Kombination aus Ozon mit Wasserstoffperoxid oder ultraviolette Strahlung (Advanced Oxidation Process, AOP) in verdünntem flüssigen Abfall eingesetzt und haben dabei eine Reduzierung von 80 bis 90 % an CSB und 90% am Polyphenolische Komponenten erzielt. Die dabei verwendete Ozonkonzentration lag zwischen 3-4 g/l, mit 2,5 g/l anfängliche Wasserstoffperoxidkonzenration bzw UV Bestrahlung bei 254 nm. Die praktische Anwendung dieser Forschungsergebnisse stoßt auf ein finanzielles und ein methodisches Problem. Der Abfall den die Autoren verarbeitet haben hatte nach der Verdünnung eine CSB Konzentration < 1000 mg/l, während die tatsächlichen CSB Konzentrationen bei > 10000 mg/l liegen. Das Erreichen eines hohen Abbaugrades in dem verdünnten Abfall bedeutet nicht daß ähnliche Ergebnisse im tatsächlichen Abfall zu erwarten sind,abgesehen davon daß die Verdünnung der Abfälle gesetzlich verboten ist. Zusätlich dazu sind die Kosten der Oxidation wegen des Ozons und der ultravioletten Strahlung sehr hoch.

Schließlich werden in der Literatur auch Publikationen erwähnt, die eine Kombination biologischer und chemischer Behandlung für obige Abfälle vorschlagen (Beltran-Heredia *et al*., 2000, Benitez *et al.* 1999, Rivas *et al.,* 2001a,b). In allen Arbeiten sind folgende Punkte sind charakteristisch:
- Das Verwenden von gemischter mikrobieller Population von aktivem Schlamm aus kommunalen Kläranlagen
- Oxidation mit Ozon vor der biologischen Klärstufe für den selektiven Abbau der phenolischen Komponenten, die die Aktivität der mikrobiellen Population in der biologischen Stufe vermindern
- Verwendung von Abwaschabfällen aus der Behandlung von schwarzen Oliven
- Bei der biologischen Behandlung des vorher chemisch oxidierten Abfalls ist durchschnittlich eine Reduzierung der CSB Konzentration um ca. 82% und des Phenolabbaus um ca. 76% gelungen
- In der biologischen Klärstufe wird die CSB Konzentration von 73 bis 81% und die Polyphenole von 44 bis 51 % reduziert. Bei der chemischen Oxidation mit Ozon wird CSB um 24-33% und die Polyphenole um 30-67% abgebaut.

Das Verfahren das im vorliegenden Patent anschließend ausführlich beschrieben wird, erreicht nach der Verarbeitung der flüssigen Abfälle aus der Olivenproduktion eine Reduzierung der CSB Konzentration um 90% und der Polyphenole, die die mikrobielle Aktivität kommunaler bzw industrieller Kläranlagen verhindern, um mehr als 98%, verglichen mit den anfänglichen Konzentrationen dieser Parameter. Auf diese Weise ist es möglich die verarbeiteten flüssige Abfälle weiter in kommunalen bzw industriellen Kläranlagen problemlos zu entsorgen. Die hauptsächlichen Verbesserungen bzw. Veränderungen des kandidierendes Patentes im Vergleich zu den bereits erwähnten Methoden sind :
- Höhere Ausbeute bei der Entfernung der organischen Kontaminanten, insbesondere der phenolischen Verbindungen
- Die biologische Verarbeitungsstufe, wo der größte Teil der organischen Verbindungen abgebaut wird, wird der chemischen vorgeschaltet, um die restlichen Phenole die teilweise biologisch nicht abgebaut werden können bzw ihre Metaboliten selektiv zu zerstören. Bei dieser Reihenfolge ist es möglich den Reinigungsgrad des Endproduktes, je nach Bedarf, mit der Menge des Oxidationsmittels und der Zeit zu steuern. Da dieses aber stark mit den Betriebskosten zusammenhängt ist es vorteilhaft die biologische Verarbeitungsstufe unter idealen Zuständen zu laufen.
- In der biologischen Klärungsstufe wird keine gemischte mikrobielle Population benützt. Es herrscht ein spezifischer Organismus des Geschlechts *Aspergillus* den wir aus einem Boden isoliert haben, der vorher mit denselben flüssigen Abfällen kontaminiert wurde. Dieser Organismus besitzt die Fähigkeit Phenole abzubauen. Der Stamm diese Mikroorganismen wird in einer Sammlung an der Harokopion Universität aufbewahrt.
- Die Methode wird in einer Mischung aus Abfällen aus dem Entbitterungsprozess und den Waschvorgängen, so wie sie in Wirklichkeit in Tafelolivenbehandlungs- und Produktionsfabriken anfallen, angewandt.

Die Methode von der Verarbeitung flüssiger Abfälle aus der Produktion von grünen Tafeloliven die von uns entwickelt wurde besteht aus zwei Teilen:
A. Biologische Behandlung der Abfälle
B. Chemische Bearbeitung
   Die wichtigsten Charakteristika der Methode sind:
   1. Ansäuern der Abfälle bis zu einem pH Wert < 5
   2. Einsetzung einer mikrobiellen Population in der eine natürlich isolierte Miszellenart des Geschlechtes *Aspergillus,* das die Fähigkeit besitzt die Phenole und die restlichen organischen Kontaminanten zu zersetzen
   3. Absicherung aerober Bedingungen für die Aktivierung der Mikroorganismen
   4. Sedimentation der in der biologischen Stufe anfallenden Biomasse, die teilweise für das Anreichern der mikrobiellen Population in das Belüftungsreservoir zurückkehrt
   5. Chemische Oxidation der überliegenden wässriger Phase mit Wasserstoffperoxid und Fenton's Reagenz als Katalysator mit oder ohne Zusatz Ultraviolleter bzw Sonnenstrahlung (Photo-Fenton) oder Elektrolyse (Electo-Fenton)

In der ersten Phase werden die Abfälle angesäuert bis der pH einen Wert zwischen 3 und 5 erreicht hat, wobei aus experimentellen Ergebnissen der Wert von 4.5 als ideal zu bezeichnen ist. Dieser Schritt ist besonders wichtig für die Einsetzung der mikrobiellen Population, die die Fähigkeit besitzt die organische Kontaminanten, insbesondere die Phenole, abbauen zu können.

Die zweite Phase besteht aus der biologischen Verarbeitung der Abfälle. Diese Stufe findet in einem Bioreaktor statt, um eine gute Belüftung des Systems (mimimale Konzentration an gelöstem Sauerstoff 2 ppm) zu gewährleisten. Im industriellen Maßstab wird die Anlage wegen der Betriebskosten bei einer Sauerstoffkonzentration von genau 2 ppm durchgeführt Der Bioreaktor kann sowohl vom Typ *air lift,* das bedeutet Luftzufuhr und Rühren finden geichzeitig statt oder von irgendeiner anderen Form, wo ein Rührwerk und eine Sauerstoffquelle installiert worden sind, sein. Die Zufuhr des Systems mit Abfällen kann kontinuierlich oder semikontinuierlich sein.
Die hydraulischen Verbleibzeit der Abfälle im Bioreaktor beträgt ca. 48 Stunden.

Diese Koditionen erlauben die selektive Ausbreitung des *Aspergillus* im Vergleich zu anderen Mikroorganismen Auf diese Weise wird, ohne Kosten und ohne komplizierte Installationen die Durchsetzung einer Kategorie von Mikroorganismen, die die organischen Verbindungen im Abfall abbauen, aus einer gemischten mikrobieller Population abgesichert.

Die produzierte Biomasse wird kontinuierlich über natürliche Sedimentation entfernt, da von den Mizetten der Fungi Konglomerate gebildet werden, die die schwimmenden Festkörper von kleinem Durchmesser mit hinreissen In diesem Schritt wird ein großer Teil der organischen Kontaminanten, gemessen als CSB (7-86%) und der phenolischen Verbindungen entfernt (von den 13 quantifizierten Phenolen sind 10 nicht mehr nachweisbar und die Konzentration von wurde um 34% bzw.55% reduziert).

Die überliegende Flüssigkeit, größtenteils befreit von organischen Kontaminanten, wird im nächsten Schritt chemisch oxidiert. In dieser Phase werden Verbindungen, die biologisch nicht abgebaut werden konnten, oxidiert. Um das zu erreichen braucht man ein starkes Oxidationsmittel wie es z.b das Reagenz Fenton ist, in einer Konzentration von etwa 0,2% Wasserstoffaperoxid mit 250 ppm Eisen (II) Lösung oder Elektrolyse mit Eisenelektroden in Anwesenheit von Wasserstoffaperoxid in einer Konzentration von 2.5% (Electo-Fenton Phänomen. Die Verweilzeit in diesem Stadium betraägt etwa 1 Stunde. Bei Verwendung von Fenton Reagenz die Verweilzeit hängt mit der Eisen(II)sulfat Konzentration zusammen. Die Anwendung von Ultraviolletem- oder Sonnenlicht beschleunigt die Prozedur mit dem Reagenz Fenton und reduziert die Chemikalienmengen. Die Wahl zwischen den verschiedenen Oxidationsmöglichkeiten sollte vom ökonomischen Gesichtspunkt und der Menge der zu sanierenden Abfälle getroffen werden.

Dieses Stadium hat zwei Funktionen die gleiche Bedeutunhaben: die verbleibende Kontamination gemessen als CSB wird "flüssig verbrannt" und die phytotoxische organischen Verbindungen, die nach der biologischen Stufe nachzuweisen waren, werden zersetzt.

Im letzten Schritt werden die verarbeitete Abfälle vom Oxidationsreaktor in die Sedimentationskammer überführt, wo sie mit Calciumhydroxid flockiert werden. Die überliegende Flüßigkeit kann nach Regulierung des pH Wertes zwischen 6 bis 9 in Kläranlagen von Industriegebieten bzw. Kommunen eingeleitet werden. Letzteres wurde nicht nur aus Laboratoriumversuchen, sondern auch während des Betriebes einer grossen Pilotanlage in einer der größten griechischen Fabriken (Vereinigung der Genossenschaften für Oliven und Olivenöl in Stylida) für die Produktion von Tafeloliven im Industriegebiet der mittelgriechischen Stadt Lamia nachgewiesen.

Aus einer großen Anzahl von Versuchen die durchgeführt wurden, seien anzeigend an dieser Stelle zwei erwähnt.

### Referenzbeispiel

Flüssige Abfälle aus der Produktionsstätte der Olivenölgenossenschaft "Peta Artas" mit einer anfänglichen CSB Konzentration von 8600 mg/l wurden in 200 ml einer geschlossenen Kultivierung gegährt. Der pH Wert wurde vor der Impfung auf 5 eingestellt. Die Gährung fand in einem Zeitraum von 4 Tagen unter Rühren bei 150 rpm unter aeroben Bedingungen bei einer Temperatur von 28 °C statt.
Die überliegende Flüssigkeit, die nach natürlicher Sedimentation eine CSB Konzentration von 1225 mg/l (Ausbeute 86%) hatte, wurde anschließend für 45 Minuten in Gegenwart von 2.5% iger Wasserstoffperoxidlösung elektrolysiert (Verwendung von Eisenelektroden) Anschließend wurde mit wässrigem Calciumoxid bis zu einem pH Wert von 11 bis 12 sedimentiert. Die überliegende Flüßigkeit hatte eine CSB Konzentration von 120 mg/l, das bedeutet die Ausbeute über die gesamte Prozedur betrug 98%. Nach der Elektolyse wurden von den anfänglich 13 anwesenden Phenole und Phenolsäuren nur D-3-Phenylmilchsäure mit einer um 79 % reduzierte Konzentration nachgewiesen werden.

### Beispiel

Die selbe Methodologie wurde mit einem flüssigen Abfall aus derselben Fabrik in einer Pilotanlage unter Verwendung eines 13 m³ *air-lift* Bioreaktors angewandt. Lüftung und Rühren des Abfalls sind mittels Einleitung gepresster Luft gelungen, während die Gährung bei Raumtemperatur stattfand. Der Abfall mit anfänglicher CSB Konzentration 17100 mg/l wurde auf pH 4.5 eingestellt und mit dem bereits erwähnten Mikroorganismus in einer Konzentration 10⁷ Sporen/cm³ geimpft. Nach 2.5 Tagen betrug die CSB Konzentration der überliegenden Flüssigkeit nach natürlicher Sedimentation 5000 mg/l (Ausbeute 71%. Anschließend wurde der flüssige Abfall einer einstündigen chemischen Oxidation mit 250 ppm Fenton Reagenz [Eisen (II) sulfat] und 0.2% Wasserstoffperoxid unterworfen.
Zum Schluss fand Flockierung mit wäßriger Calciumoxidlösung statt, wobei nach Sedimentation der überliegenden Flüssigkeit eine CSB Konzentration von 430 mg/l zugeordnet werden konnte (Ausbeute 91%). Die Gesamtausbeute aus biologischer und chemischer Stufe angesichts der CSB Reduzierung betrug 97%.

## Patentansprüche

1. Verfahren zur Bearbeitung von flüssigen Abfällen aus Fabriken die Tafeloliven produzieren und konservieren **gekennzeichnet durch**: a) Ansäuern der flüßigen Abfälle bis zu einem pH Wert < 5 b) Biologische Bearbeitung in einem Bioreaktor mit einer mikrobiellen Population des Geschlechtes Aspergillus c) Aerober Bedingungen für die Aktivierung der Mikroorganismen d) Sedimentation der anfallenden Biomasse und e)Chemische Oxidation der wäßrigen Phase mit Wasserstoff peroxid und Katalysator

2. Verfahren zur Bearbeitung von flüssigen Abfällen nach Anspruch 1 und 2, **dadurch gekennzeichnet, daß** spezielle Mikroorganismen wirken die nicht genetisch modifiziert sind.

3. Verfahren zur Bearbeitung von flüssigen Abfällen nach Anspruch 1, **dadurch gekennzeichnet, daß** die chemische Oxidation der wäßrigen Phase mit Wasserstoffperoxid und Fenton Reagenz als Katalysator durchgeführt wird

4. Verfahren zur Bearbeitung von flüssigen Abfällen nach Anspruch 1 und 4, **dadurch gekennzeichnet, daß** die chemische Oxidation mit Sonnenenergie durchgeführt wird

5. Methode zur Verarbeitung von flüssigen Abfällen nach Anspruch 1 und 4, **dadurch gekennzeichnet, daß** die chemische Oxidation mit Ultraviolletem- Licht durchgeführt wird

6. Methode zur Verarbeitung von flüssigen Abfällen nach den Ansprüchen 1 und 3, **dadurch gekennzeichnet daß** die chemische Oxidation mit Elektrolyse durchgerührt wird

## Claims

1. Method for the treatment of liquid waste from factories producing and conserving eatable olives **characterized by**: a) acidifying the liquid waste to a pH value <5, b) biological treatment in a bioreactor with a microbe population of the aspergillus gender, c) aerobe conditions for the activation of the micro-organisms, d) sedimentation of the resulting biomass and e) chemichal oxidation of the aqueous phase with hydrogen peroxide and catalyst.

2. Method for the treatment of liquid waste according to claim 1 and 2, **characterized by** the fact that special micro-organisms are active that have not been genetically modified.

3. Method for the treatment of liquid waste according to claim 1, **characterized by** the fact that the chemical oxidation of the aqueous phase is accomplished with hydrogen peroxide and Fenton reagent as catalyst.

4. Method for the treatment of liquid waste according to claim 1 and 4, **characterized by** the fact that the chemical oxidation is accomplished with solar power.

5. Method for the treatment of liquid waste according to claim 1 and 4, **characterized by** the fact that the chemical oxidation is accomplished with ultraviolet light.

6. Method for the treatment of liquid waste according to claim 1 and 3, **characterized by** the fact that the chemical oxidation is accomplished with electrolysis.

## Revendications

1. Méthode pour le traitement des eaux usées des usines qui produisent et conservent d'olives, **caractérisé par** : a) acidificattion des eaux usées jusqu'à une valeur de pH <5, b) traitement biologique dans un bioreacteur avec une population microbielle du genre aspergillus, c) conditions aerobes pour l'activation des microorganismes, d) sédimentation de la biomasse résultante et e) oxydation chimique de la phase aqueuse avec peroxyde d'hydrogène et catalyseur.

2. Méthode pour le traitement des eaux usées d'après la revendication 1 et 2, **caractérisé par le fait que** des microorganismes spéciaux sont actives qui ne sont pas génétiquement modifiés.

3. Méthode pour le traitement des eaux usées d'après la revendication 1, **caractérisé par le fait que** l'oxydation chimique de la phase aqueuse est accomplie avec du peroxyde d'hydrogène et le réactif de Fenton comme catalyseur

4. Méthode pour le traitement des eaux usées d'après la revendication 1 et 4, **caractérisé par le fait que** l'oxydation chimique est accomplie avec l'energie solaire.

5. Méthode pour le traitement des eaux usées d'après la revendication 1 et 4, **caractérisé par le fait que** l'oxydation chimique est accomplie avec la lumière ultraviollete.

6. Méthode pour le traitement des eaux usées d'après la revendication 1 et 3, **caractérisé par le fait que** l'oxydation chimique est accomplie d'électrolyse.
